# EUROPEAN PATENT APPLICATION

(11) **EP 1 172 511 A1**
(43) Date of publication of application: **16.01.2002**
(21) Application number: 00830484.2
(22) Date of filing: 10.07.2000
(51) Int. Cl.: E06B 3/96

(54) **A connecting element for connecting tubular sections and related mounting method**

(71) Applicant: L.M. dei F.lli Monticelli S.r.l., 60027 Osimo (Ancona) (IT)
(72) Inventor: Monticelli, Domenico, 60027 Osimo AN (IT)
(74) Representative: Lanzoni, Luciano

(57) **Abstract**

A connecting element (1) for connecting tubular sections (13), in particular for the construction of window and door frames, comprises a rigid body (2) provided with elongated arms (3), which can be inserted into the cavities (12) of the tubular sections (13) through related end openings (14), and bear seats (4) destined to face respective walls (15) of the section (13); a pushbutton (5) housed in the seat (4); and a spring (6) which checks the pushbutton (5) from the interior of the seat (4) in such a way as to thrust it towards the exterior. The seat (4) is provided with a closed bottom wall (8) and is accessible through a single opening (11) opposite the wall (15) of the section (13) which is joined to the connecting element (1). A method for mounting the connecting element (1) is also part of the invention.

## Description

The present invention relates to the construction of connecting elements for connecting tubular sections destined to be used, for instance, for the construction of window and door frames.

In the fabrication of door and window frames, tubular sections are joined head to head and connected - usually in correspondence with vertices of the frame - by means of prefabricated connection elements which are introduced into the cavities of two consecutive sections and closely connected to said sections.

A known type of such connecting elements comprises a rigid body provided with elongated arms bearing seats destined to lie opposite to a wall of the sections to be connected, a pushbutton housed within each of the seats, and a spring which checks the pushbutton from within its own seat so as to push it towards the exterior of the connecting element.

In the fabrication of the window or door frame, the aforesaid connecting element is introduced into the cavities of the tubular sections and made to advance therein until it arrives in correspondence with holes drilled on the walls of the sections at an appropriate distance from the inlet end of the cavity. When the pushbuttons arrive in correspondence with such holes, under the thrust of the spring, no longer contrasted by the wall of the section, the pushbuttons themselves exit from the seats and enter the holes with a snap movement, mutually joining the connecting element and the sections.

In the connecting elements of the prior art, the seats are obtained by means of through holes which traverse the entire thickness of the arms and which are closed at one of their ends with a metal disk, constituting the bottom of the seats, which is caulked on the body of the connecting element after the pushbuttons and the springs have been inserted inside the holes.

The constructive shape of the holes of the seats, the need to prepare closure disks, and especially their caulking on the seats which makes it necessary to use special mounting tools and presses with a certain power, make mounting the connecting element rather laborious and costly.

The aim of the present invention is to eliminate the aforesaid drawbacks by means of a connecting element shaped in such a way as to make mounting simpler, more rapid, and less costly in particular from the viewpoint of the tooling necessary for its execution and of the lesser power required by such tools to execute the mounting operation.

This aim is achieved by a connecting element for connecting tubular sections, in particular for the construction of window and door frames, of the type comprising a rigid body provided with elongated arms, which can be inserted into the cavities of the tubular sections through related end openings, and have seats opposite to a wall of the section; a pushbutton housed in the seat and a spring that checks the pushbutton from the interior of the seat in such a way as to thrust it towards the exterior; characterised in that said seat has a peripheral wall and a bottom wall that are mutually integral, in particular in a single body, which make it accessible through a single opening, opposite to the wall of the section.

The connecting element is mounted with a method, also forming a part of the invention, characterised in that it comprises the steps of introducing into the seat, provided with a single access opening oriented towards the wall of the section, the spring and the pushbutton; pressing the pushbutton from the exterior towards the exterior of the seat against the spring to cause the controlled elastic collapse thereof, whereby at least a turn of each end of the spring connects to projections which extend towards the spring from pushbutton and from the bottom wall of the seat.

The technical characteristics of the invention, according to the aforesaid aims, can clearly be noted from the content of the claims set out below and its advantages shall become more readily apparent in the detailed description that follows, made with reference to the accompanying drawings, which represent an embodiment provided purely by way of non limiting example, in which:
- Figure 1 is a perspective view of a connecting element shown globally in a condition of operative readiness;
- Figure 2 is a section of the connecting element taken according to a transverse plane;
- Figure 3 is a partial view of a detail of the connecting element shown in enlarged scale.

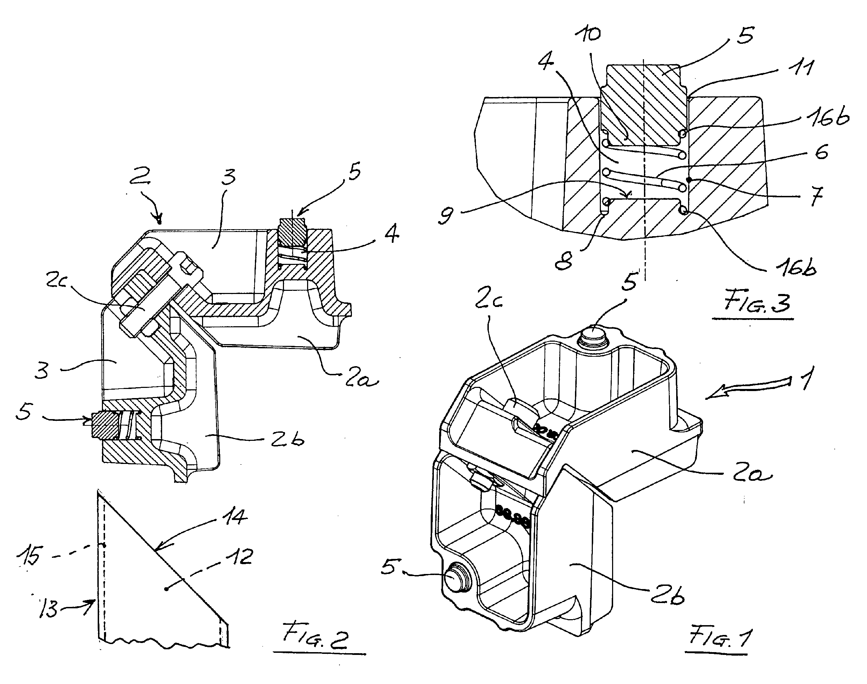

With reference to Figure 1 of the accompanying drawings, the reference number globally indicates a connecting element for connecting tubular sections 13 destined in particular to the construction of window and door frames.

The connecting element 1 essentially comprises a rigid body 2 constructed in two distinct metal parts 2a, 2b, mutually interconnected by a connecting screw 2c. The rigid body 2 is provided with elongated arms 3, positioned at a right angle in the example of Figure 2, which during the employment of the connecting element 1 in the construction of window and door frames are inserted into the cavities 12 of the tubular sections 13, through related end openings 14.

The arms 3 bear: seats 4 destined to be oriented opposite a wall 15 of the section 13; pushbuttons 5 housed in the seats 4; and springs 6 which check the respective pushbuttons from the interior of the seats 4 in such a way as to thrust them towards the exterior of the connecting element 1.

The seats 4, cylindrical in shape, are blind, in the sense that they have a mutually integral peripheral wall 7 and a bottom wall 8. These are obtained unitarily in the material constituting the arm 3, and make the seat 4 accessible from the exterior solely through a single opening 11 which, in the condition of use of the connecting element 1, is oriented in such a way as to be opposite a wall 15 of the section 13 bearing a hole - not shown in the figures - wherein the pushbutton 5 is destined to be engaged in a known manner.

The bottom wall 8 of the seat 4 is provided with a protruding cylindrical projection 9 whereto is fastened at least a first turn 16a of the spring 6; the pushbutton 5 is also provided with a protruding projection 10, with similar shape, whereon at least a second turn 16b of the spring 6 (Figure 3) is fastened.

The projections 9 and 10 represent a preferable embodiment of fastening means, more generally defined, which, by positioning themselves: between pushbutton 5 and spring 6 on one side; and between spring 6 and seat 4 on the other; allow to maintain the pushbutton 5 connected with its own seat 4, in a well determined relative reference position.

The connecting element 1 can be executed with a succession of steps which provide for introducing into the seat 4, provided with the sole access opening 11, the spring 6 and the pushbutton 5; and then pressing from the exterior towards the interior of the seat 4 the pushbutton 5 against the spring 6 to cause its controlled elastic collapse, whereby at least a turn 16a, 16b of each end of the spring 6 connects with the projections 9, 10 which on one side protrude towards the spring 6 from the pushbutton 5 and on the other side from the bottom wall 8 of the seat 4.

The step of pressing the pushbutton 5 is executed with a pressing force of modest intensity, controlled in such a way as to produce a sufficient widening of the turns 16a, 16b of the spring 6 to allow the insertion of the spring 6 of the corresponding projections 9, 10 and to allow them to be retained, by elastic interference, following the cessation of the pressing force.

The invention fully achieves its intended aims and is characterised by a considerable economy of construction. It is susceptible of evident industrial application and it may be subject to numerous modifications and variations, without thereby departing from the scope of the inventive concept. Moreover, all components may be replaced with technically equivalent elements.

## Claims

1. A connecting element for connecting tubular sections (13), in particular for the construction of window and door frames, comprising a rigid body (2) provided with elongated arms (3), which can be inserted into the cavities (12) of the tubular sections (13) through related end openings (14), and bear seats (4) destined to face respective walls (15) of the sections (13); a pushbutton (5) housed in the seat (4); and a spring (6) which checks the pushbutton (5) from the interior of the seat (4) in such a way as to thrust it towards the exterior; **characterised in that** said seat (4) is provided with a closed bottom wall (8) and is accessible through a single opening (11) opposite to the wall (15) of the section (13) which is joined to the connecting element (1).

2. A connecting element, according to the claim 1, **characterised in that** it comprises fastening means (9, 10) to connect the pushbutton (5) to the seat (4) and to maintain it in a well determined relative position.

3. A connecting element, as claimed in claim 2, **characterised in that** the bottom wall (8) of the seat (4) is provided with a protruding projection (9) whereto is fastened at least a first turn (16a) of the spring (6).

4. A connecting element, as claimed in claim 3, **characterised in that** said projection (9) has cylindrical shape.

5. A connecting element, as claimed in claim 3, **characterised in that** the pushbutton (5) is provided with a protruding projection (10) whereon at least is fastened a second turn (16b) of the spring (6).

6. A method for mounting a connecting element for connecting tubular sections (13), in particular for the construction of window and door frames, which comprises a rigid body (2) provided with elongated arms (3), which can be inserted into the cavities (12) of the tubular sections (13) through related end openings (14), and bear seats (4) destined to face a wall (14) of the section (13); a pushbutton (5) housed in the seat (4) and a spring (6) that checks the pushbutton (5) from the interior of the seat (4) in such a way as to thrust it towards the exterior; method **characterised in that** it comprises the steps of introducing into the seat (4), provided with a single access opening (11) oriented towards the wall of the section (13), the spring (6) and the pushbutton (5); pressing from the exterior towards the interior of the seat (4) the pushbutton (5) against the spring (6) in such a way as to cause a controlled elastic collapse, as a consequence whereof at least a turn (16a, 16b) of each end of the spring (6) connects to projections (9,10) which extend towards the spring (6) from the pushbutton (5) and from the bottom wall (8) of the spring (4).

7. A method, as claimed in claim 6, **characterised in that** the step of pressing the pushbutton produces a widening of the turns (16a, 16b) of the spring (6) sufficient to allow the insertion of corresponding projections (9, 10) into the spring (6) and their retaining by elastic interference following the cessation of the pressing force.
